# EUROPÄISCHE PATENTSCHRIFT

(11) **EP 1 982 674 B1**
(45) Veröffentlichungstag und Bekanntmachung des Hinweises auf die Patenterteilung: **08.02.2012**
(21) Anmeldenummer: 07405126.9
(22) Anmeldetag: 24.04.2007
(51) Int. Cl.: A61D 5/00

(54) **Tier Beiss-Schutz**
Animal bite protection
Protection contre les morsures d'animaux

(30) Priorität: 19.04.2007 CH 6422007
(43) Veröffentlichungstag der Anmeldung: 22.10.2008
(73) Patentinhaber: S-Tim Protec AG, 3930 Visp/VS (CH)
(72) Erfinder: Rushadije, Hasani Sakiri, 3900 Brig (CH)

(56) Entgegenhaltungen:
- EP-A- 1 369 035
- DE-C1- 19 915 567
- GB-A- 720 226

## Beschreibung

Die Idee einen derartigen Beissschutz zu erstellen besteht darin, dass in letzter Zeit Angriffe von Hunden, wie in den Medien publiziert, nicht abgenommen haben. Trotz diverser Vorrichtungen wie Hunde an die Leine zu nehmen und bei gefährlichen Rassen sogar Maulkörbe angesagt werden, können

Beissattacken nicht verhindert werden. Das Dokument EP-A-1369035 offenbart einen gattunsgemäßen Maulkorb*.* In unserer Zeit kann und darf das nicht mehr toleriert werden. Deshalb habe ich einen Beissschutz zur Verhinderung von Bissverletzungen entwickelt. Mir ist bekannt, dass das Patent GB 720226 auch eine Schiene beschreibt, aber es wird nicht ein verhindern von Beissverletzungen und Unfällen beschrieben. Mein Projekt kennzeichnet sich dadurch, dass eine Schutzschiene im Oberkiefer und eine Schutzschiene im Unterkiefer getragen werden soll. Dieses Material weist eine geeignete Härte, Stabilität und ein angenehmes Tragekomfort auf. Er kann je nach Bedarf aus verschiedenen Materialien hergestellt werden. Der Beissschutz umfasst den gesamten Zahnkranz des Ober - und Unterkiefers. Im vestibulären Mundmilieu greift sie je nach bedarf bis zur Umschlagsfalte des jeweiligen Kiefers. Im palatinalen Teil des Oberkiefer wird der Gaumen auch teilweise erfasst. Der linguale Teil des Unterkiefers wird so tief wie möglich erfasst. Deshalb kann das jeweilige Tier den Bissschutz nicht alleine aus dem Mund nehmen.

Die Erfindung basiert darauf, dass der Hund, oder das jeweilige Tier in seiner Lebensweise nicht behindert wird. Er kann seine natürlichen Tätigkeiten und Freiheiten ungehindert geniessen, er kann trinken, ungestört atmen.

Doch nur eins kann er nicht, das ist Beisswunden verursachen oder sogar töten. Weil er durch das tragen des Beissschutzes höchstens blaue Flecken verursachen kann.

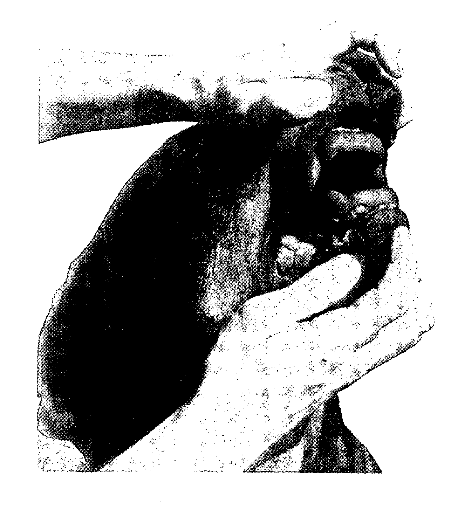

## Patentansprüche

1. Tierbeissschutz als Aufsatz für alle Tierzähne, **dadurch gekennzeichnet, dass** er einen ersten Teil für den Oberkiefer und einen zweiten Teil für den Unterkiefer umfasst, wobei beide Teile über den gesamten Zahnkranz und Teile des Zahnfleisches angepasst sind.

2. Tierbeissschutz nach Anspruch 1, **dadurch gekennzeichnet, dass** im vestibulären Mundmilieu greift er je nach bedarf bis zur Umschlagsfalte des jeweiligen Kiefers.

3. Tierbeissschutz nach einem der Ansprüche 1 oder 2, **dadurch gekennzeichnet, dass** im palatinalen Teil des Oberkiefers der Gaumen auch teilweise erfasst ist.

4. Tierbeissschutz nach einem der Ansprüche 1 -3, **dadurch gekennzeichnet, dass** der linguale Teil des Unterkiefers so tief wie möglich erfasst ist.

5. Tierbeissschutz nach einem der Ansprüche 1 -4, **dadurch gekennzeichnet, dass** er aus Hartgummi besteht.

6. Tierbeissschutz nach einem der Ansprüche 1 -4, **dadurch gekennzeichnet, dass** er aus Kunststoff besteht, wobei der Schutz aus folgenden Materialien gemacht werden kann:
a) Schellack
b) Harte Schutze (Acrylate)
c) Hart weiche thermoplastische Schutze
d) Halbweiche thermoplastische Schutze
e) Weiche thermoplastische Schutze wobei zusätzlich eine Metallverstärkung eingebaut werden kann, wobei die Basis mit hartem Kunststoff gemacht werden kann, danach darüber mit einer hart weichen, halbweichen oder weichen Platte tiefgezogen werden kann, oder die Basis auch mit einer weichen Material tiefgezogen werden kann, darüber mit hartem Acrylat verstärkt werden kann.

7. Tierbeissschutz nach einem der Ansprüche 5 oder 6, **dadurch gekennzeichnet, dass** die Härte des Materials der Grösse des Tiers und/oder dessen Beisskraft angepasst ist.

8. Herstellungsverfahren für einen Tierbeissschutz nach einem der vorangehenden Ansprüche, **dadurch gekennzeichnet, dass** der Tierbeissschutz aus herkömmlichen Methoden der Odontologie hergestellt wird, mit den Schritten:
- vom Tierarzt braucht man einen Abdruck des Ober- und Unterkiefers in der Ruheposition;
- die Abdrücke werden anschliessend an den Zahntechniker weitergegeben, welcher diese giesst mit Gips aus und zeichnet nach dem Aushärten den prothetischen Äquator mit dem Parallelometer ein;
- anschliessend werden die in Frage kommenden
Bereiche ausgeblockt;
- das Modell im Granulat soweit betten, dass nur
die Bereiche des Modells herausragen, die der gewünschten Ausdehnung des Beissschutzes entsprechen;
- Anschliessend wird eine Platte über das Modell tiefgezogen;
- die tiefgezogene Platte mit dem Modell wird aus dem Gerät genommen und die Uberschüsse werden entfernt;
- danach wird der Beissschutz vom Modell genommen, bearbeitet und poliert;
- falls erwünscht, kann man beide Beissschutze,
Ober -und Unterkiefer in der Interkuspidation "Schlussbiss" zusammen Verkleben; ansonsten werden diese getrennt getragen, welche auch ein höheres tragekomfort aufgewiesen werden kann.

9. Herstellungsverfahren für einen Tierbeissschutz nach Anspruch 8, **dadurch gekennzeichnet, dass** die Platte mit einem Heissluftbrenner oder Bunsenbrenner erwärmt wird, dabei wird die Platte auf das Modell gelegt und erwärmt, durch die Hitze wird das Material weich und es legt sich über die Situation des Modells, danach den Beissschutz abkühlen lassen und wie gewohnt bearbeiten; damit wird erreicht, dass der Schutz sehr formstabil ist, angenehm zu tragen, kann leben retten und aus geprüften und jahrelang geprobten Materialien dank neuen Technologien hergestellt wird.

10. Herstellungsverfahren für einen Tierbeissschutz nach einem der Ansprüche 1 -7 **dadurch gekennzeichnet, dass** der Beissschutz als vorgefertigte hohle Schiene in drei Grössen (klein, mittel, gross) hergestellt werden kann, wonach der Tierarzt diese einprobieren kann und mit einem speziellem Auffüllmaterial auffüllen und im Tiermund über die Gebisssituation aushärten lassen, wobei nach der Aushärtungsphase nimmt man die Beissschutze aus dem Tiermund und schneidet man die Überschüsse mit einer Schere weg.

## Claims

1. An animal muzzle as a fixture for any animal teeth, **characterized in that** the same comprises a first part for the upper jaw, and a second part for the lower jaw, wherein both parts are adjusted to fit the entire tooth rim and parts of the gums.

2. The animal muzzle according to claim 1, **characterized in that** the same engages, as needed, up to the reflection of the respective jaw in the vestibular oral environment.

3. The animal muzzle according to one of the claims 1 or 2, **characterized in that** the roof of the mouth is also partially included in the palatal part of the upper jaw.

4. The animal muzzle according to one of the claims 1-3, **characterized in that** the lingual part of the lower jaw is included as low as possible.

5. The animal muzzle according to one of the claims 1-4, **characterized in that** the same consists of hard rubber.

6. The animal muzzle according to one of the claims 1-4, **characterized in that** the same consists of plastic, wherein the muzzle may be fabricated from the following material:
a) shellac
b) hard muzzles (acrylates)
c) hard-soft thermoplastic muzzles
d) semi-soft thermoplastic muzzles
e) soft thermoplastic muzzles, wherein an additional metal reinforcement may be incorporated, wherein the base may be fabricated from hard plastic with subsequent thermoforming using a hard-soft, semi-soft, or soft plate over the same, or the base may also be thermoformed using a soft material, and may be reinforced using hard acrylate over the same.

7. The animal muzzle according to one of the claims 5 or 6, **characterized in that** the hardness of the material is adjusted to the size of the animal, and/or the biting power thereof.

8. A method for the production of the animal muzzle according to one of the preceding claims, **characterized in that** the animal muzzle is produced using common methods of odontology, using the following steps:
- a cast of the upper and lower jaw in the resting position is obtained from the veterinarian;
- the casts are subsequently forwarded to the dental technician who casts the same in cement and marks the prosthetic equator into the same after curing using the parallelometer;
- subsequently the areas in questions are blocked out;
- the model is embedded into the granulate until only
those areas of the model protrude, which correspond to the desired expansion of the muzzle;
- subsequently a plate is thermoformed over the model;
- the thermoformed plate is removed from the device along with the model, and any excess is removed;
- subsequently the muzzle is removed from the model, processed, and polished;
- if desired, both muzzles, upper and lower jaw, may be glued together in the intercuspidation of "terminal occlusion;" otherwise the same are worn separately, which may also represent a greater comfort for wearing.

9. The method for the production of an animal muzzle according to claim 8, **characterized in that** the plate is heated using a hot air burner, or a Bunsen burner, whereby the plate is placed onto the model and heated. The material becomes soft from the heat and covers the situation of the model, wherein subsequently the muzzle is allowed to cool and is processed as usual. In this manner it is achieved that the muzzle is extremely dimensionally stable, comfortable to wear, may save lives, and is produced from inspected and extensively tested materials owing to new technologies.

10. The method for the production of an animal muzzle according to one of the claims 1-7, **characterized in that** the muzzle may be produced as a pre-fabricated, hollow track in three sizes (small, medium, large), according to which the veterinarian may fit the same and fill the same using special filler material to be cured in the mouth of the animal across the situation of the teeth, wherein after the curing phase the muzzles are removed from the animal mouth and any excess is cut off using scissors.

## Revendications

1. Protection contre les morsures d'animaux sous la forme d'un élément de recouvrement de toutes les dents de l'animal, **caractérisée en ce qu'**elle comprend une première partie pour la mâchoire supérieure et une deuxième partie pour la mâchoire inférieure, les deux parties étant adaptées aux arcades dentaires en totalité et à des parties de la gencive.

2. Protection contre les morsures d'animaux selon la revendication 1, **caractérisée en ce que** dans le vestibule buccal, ladite protection s'engage, si nécessaire, jusqu'au repli de la mâchoire respective.

3. Protection contre les morsures d'animaux selon la revendication 1 ou 2, **caractérisée en ce que** dans la partie palatine de la mâchoire supérieure, le palais est également saisi en partie.

4. Protection contre les morsures d'animaux selon l'une quelconque des revendications 1 à 3, **caractérisée en ce que** la partie linguale de la mâchoire inférieure est saisie aussi profondément que possible.

5. Protection contre les morsures d'animaux selon l'une quelconque des revendications 1 à 4, **caractérisée en ce que** ladite protection est réalisée en caoutchouc dur.

6. Protection contre les morsures d'animaux selon l'une quelconque des revendications 1 à 4, **caractérisée en ce que** ladite protection est réalisée en matière plastique, elle peut être réalisée dans les matériaux suivants :
a) gomme-laque,
b) protection dure (acrylate),
c) protection thermoplastique dure souple,
d) protection thermoplastique semi-souple,
e) protection thermoplastique souple, dans laquelle peut être intégrée, en plus, un renfort métallique, la base pouvant être réalisée en matière plastique dure, sur laquelle peut être emboutie ensuite une plaque dure souple, semi-souple ou souple, ou la base peut aussi être emboutie avec un matériau souple sur lequel est déposé un acrylate dur pour le renforcer.

7. Protection contre les morsures d'animaux selon la revendication 5 ou 6, **caractérisée en ce que** la dureté du matériau est adaptée à la taille de l'animal et/ou à sa force de morsure.

8. Procédé pour la réalisation d'une protection contre les morsures d'animaux selon l'une quelconque des revendications précédentes, **caractérisé en ce que** la protection contre les morsures d'animaux est réalisée selon les méthodes classiques de l'odontologie, ledit procédé comportant les étapes :
- le vétérinaire réalise une empreinte de la mâchoire supérieure et de la mâchoire inférieure dans la position de repos ;
- les empreintes sont transmises au technicien dentaire, qui les moule en plâtre et y imprime ensuite, après le durcissement, l'équateur prothétique avec le parallélomètre ;
- ensuite sont démoulées les zones concernées ;
- le modèle est enrobé dans des granulés de telle sorte que seules s'engagent vers l'extérieur les zones du modèle qui correspondent à l'extension souhaitée de la protection contre les morsures ;
- ensuite, une plaque est emboutie sur le modèle ;
- la plaque emboutie est retirée avec le modèle hors de l'appareil et les bavures sont éliminées ;
- ensuite, la protection contre les morsures est retirée du modèle, est usinée et polie ;
- si cela est souhaité, on peut assembler par collage les deux protections contre les morsures, à savoir celles de la mâchoire supérieure et de la mâchoire inférieure, dans l'intercuspidation, à savoir l'« occlusion dentaire » ; dans le cas contraire, les deux protections sont portées séparément, ce qui peut aussi conférer un plus grand confort.

9. Procédé pour la réalisation d'une protection contre les morsures d'animaux selon la revendication 8, **caractérisé en ce que** la plaque est chauffée au moyen d'un brûleur à air chaud ou d'un bec Bunsen, la plaque étant posée sur le modèle et chauffée, puis sous l'effet de la chaleur le matériau devient mou et il s'applique sur la situation du modèle, ensuite on laisse refroidir la protection contre les morsures et on l'usine de manière usuelle ; il en résulte que la protection est très stable en forme, est agréable à porter, peut sauver des vies et est réalisée dans des matériaux ayant donné de bons résultats depuis de longues années grâce aux nouvelles technologies.

10. Procédé pour la réalisation d'une protection contre les morsures d'animaux selon l'une quelconque des revendications 1 à 7, **caractérisé en ce que** la protection contre les morsures peut être réalisée sous la forme d'un profilé creux préfabriqué en trois tailles (petite, moyenne, grande), ensuite le vétérinaire peut le poser à l'essai et le combler d'un matériau de remplissage spécial et le laisser durcir dans la bouche de l'animal en étant posé sur les mâchoires, après la phase de durcissement, la protection contre les morsures est retirée de la bouche de l'animal et les bavures sont coupées à l'aide de ciseaux.
